Europäisches Patentamt

European Patent Office

Office européen des brevets

(11) Veröffentlichungsnummer: **0 461 566 A1**

## (12) EUROPÄISCHE PATENTANMELDUNG

(21) Anmeldenummer: 91109406.8

(51) Int. Cl.5: **C09D 5/44**

(22) Anmeldetag: 08.06.91

(30) Priorität: **13.06.90 DE 4018876**

(43) Veröffentlichungstag der Anmeldung:
**18.12.91 Patentblatt 91/51**

(84) Benannte Vertragsstaaten:
**AT BE CH DE DK ES FR GB GR IT LI NL SE**

(71) Anmelder: **Herberts Gesellschaft mit beschränkter Haftung**
**Christbusch 25**
**W-5600 Wuppertal 2(DE)**

(72) Erfinder: **Hirtl, Johann**
**Mastweg 179**
**W-5600 Wuppertal 12(DE)**
Erfinder: **Katzmann, Heinz-Peter**
**Zedernweg 22**
**W-5600 Wuppertal 1(DE)**
Erfinder: **Klein, Klausjörg**
**Richard-Strauss-Allee 23**
**W-5600 Wuppertal 2(DE)**

(74) Vertreter: **Türk, Gille, Hrabal**
**Brucknerstrasse 20**
**W-4000 Düsseldorf 13(DE)**

(54) **Kathodisch abscheidbare Elektrotauchlackbäder mit Additiven zur Oberflächenverbesserung sowie die Verwendung letzterer für Beschichtungsverfahren.**

(57) 2.1. Bisherige Additive zur Oberflächenverbesserung von kathodisch abgeschiedenen Überzügen ergaben keine ausreichende Antikraterwirkung bei gleichzeitig guter Haftung von Nachfolgeschichten. Dies soll verbessert werden.

2.2. Die kathodisch abscheidbare Bindemittel enthaltenden wäßrigen Elektrotauchlackbäder enthalten als Additive zur Oberflächenverbesserung 0,1 bis 5 Gew.% Homo- oder Copolymer eines Alkylvinylethers mit 1 bis 5 C-Atomen im Alkylteil und einem Gewichtsmittel der Molmasse von 500 bis 10000, zusammen mit 0,1 bis 2 Gew.% eines oder mehrerer Polyester mit $\beta$-Hydroxyalkylestergruppen mit einer Säurezahl von 0 bis 3 und einem Gewichtsmittel der Molmasse von 100 bis 10000 im Massenverhältnis Alkylvinylether zu Polyester von 1:10 bis 10:1.

2.3. Oberflächenverbesserung von kathodisch abgeschiedenen Überzügen.

EP 0 461 566 A1

Die Erfindung betrifft das Gebiet von Additiven zur Oberflächenverbesserung bei der kathodischen Elektrotauchlackierung (KTL), insbesondere den Zusatz von Antikratermitteln.

Die kathodische Elektrotauchlackierung (KTL) ist ein vor allem zum Grundieren von Automobilkarossen häufig angewandtes Verfahren, bei dem wasserverdünnbare, kationische Gruppen tragende Kunstharze mit Hilfe von Gleichstrom auf elektrisch leitende Körper abgeschieden werden. Dieses Prinzip ist in der Literatur beschrieben und in der Praxis weit verbreitet. Dabei wird ein Werkstück mit elektrisch leitender Oberfläche aus Metall oder elektrisch leitendem Kunststoff in ein wäßriges Elektrotauchbad gebracht, als Kathode an eine Gleichstromquelle angeschlossen und dann wird durch den fließenden Strom der Lack auf der Oberfläche koaguliert (EP-B-0 066 859, EP-A-0 004 090, DE-A-32 15 891). Das Elektrotauchbad besteht aus einer wäßrigen Dispersion, z.B. Suspension oder Emulsion oder aus einer wäßrigen Lösung von einem oder mehreren Bindemitteln, die durch partielle Salzbildung mit organischen oder anorganischen Neutralisationsmitteln wasserdispergierbar gemacht wurden, aus darin dispergierten Pigmenten, Füllstoffen, Additiven, dispergierten Lösemitteln und sonstigen Hilfsmitteln.

Mit Lackmaterialien dieser Zusammensetzung sollen nach der Abscheidung und dem Vernetzen des entstandenen Films glatte Oberflächen erzeugt werden. Diese Oberflächen decken Störungen aus dem Untergrund gleichmäßig ab. Sie dienen zur Erzeugung eines Untergrundes für die Folgeschichten, die einen qualitativ hochwertigen Decklack erzeugen sollen. In der Praxis treten jedoch in dem eingebrannten KTL-Film häufig Oberflächenstörungen, insbesondere Krater, oder ungleichmäßige Oberflächen auf. Die Ursachen dieser Beschichtungsstörungen können in den eingesetzten Elektrotauchlack-Materialien liegen, häufig zeigt sich jedoch, daß diese Störungen aus in das Elektrotauchlackbad eingeschleppten Verunreinigungen stammen. Beispiele für Verunreinigungen aus dem Lackmaterial sind Gelteilchen aus der Bindemittelherstellung, geschädigte Harzpartikel aus der Pigmentpastenherstellung, Verunreinigungen der Pigmente sowie Fremdsubstanzen aus Geräten, die zur Herstellung der entsprechenden Materialien dienen. Nachträglich eingeschleppte Fremdsubstanzen sind z.B. Tiefziehfette, Korrosionsschutzfette, Nahtabdichtungsmaterialien sowie Substanzen aus der Vorbehandlung.

Eine weitere Klasse von Verunreinigungen sind solche, die nach dem Abscheiden des Elektrotauchlacküberzugs aus der Luft auf dem noch nicht vernetzten Lackfilm abgelagert werden, beispielsweise fluor- oder silikonhaltige Aerosole sowie Schmiermittel aus den Transportsystemen, die zur Bewegung der zu beschichtenden Teile notwendig sind.

Diese Stoffe können vor dem Einbrennen auf den Lackfilm gelangen und verursachen dann bei dem Einbrennen beispielsweise durch Unverträglichkeiten Oberflächenstörungen, wie z.B. Krater. Eine Beeinträchtigung durch diese Materialien ist nicht vorherzusehen, sondern muß durch Experiment ermittelt werden.

Diese Oberflächenstörungen verlangen aufwendige Nacharbeiten, um eine glatte Oberfläche der Nachfolgeschichten zu erreichen. Um deshalb eine kontinuierliche Produktion sicherzustellen, ist es notwendig, diese Art von Oberflächenstörungen zu vermeiden. Da eine Verhinderung der vielfältigen Ursachen von Kratern nur schwer zu erreichen ist, wird im allgemeinen versucht, die Kraterbildung durch Additive zu vermeiden.

Als Additive zur Vermeidung von Kratern sind z.B. Silikonöle oder fluorhaltige organische Substanzen bekannt. Diese unterdrücken zwar in der angewandten Schicht die Kraterbildung, führen aber häufig in Nachfolgeschichten zu starken Oberflächenstörungen. Außerdem ist festzustellen, daß die Nachfolgeschichten schlecht auf solchen Untergründen haften. Deshalb sind diese Additive für KTL-Schichten nicht geeignet.

Deshalb wurde versucht, andere nicht silikonhaltige Additive zu finden, um diese häufigen Oberflächenstörungen zu vermeiden. Es werden in der US-A-4 810 535 als Zusatzmittel zu KTL-Systemen Polyoxyalkylenpolyamin-Umsetzungsprodukte mit Epoxidharzen beschrieben. Damit sollen Krater vermieden werden. In der EP-A-0 324 951 werden Polyoxyalkylenpolyamine als Zusatz zu KTL-Bäder beschrieben, um störungsfreie Filmoberflächen zu erhalten. In der DE-A-38 30 626 werden als Zusatzmittel zu KTL-Bädern modifizierte Acrylate beschrieben, die neutralisierbar oder nicht neutralisierbar dem Lackmaterial zugesetzt werden können. Auch in diesem Fall sollen Oberflächenstörungen verschiedener Art vermieden werden. In der EP-A-0 301 293 werden kathodische Elektrotauchlackbäder beschrieben, die als Additiv Homo- oder Copolymere eines Alkvinylethers enthalten. Alle diese Materialien zeigen die Eigenschaft, daß sie in größeren Mengen eingesetzt werden müssen, um den einer Antikraterwirkung zu erzielen. Dabei ergibt sich die Schwierigkeit, daß die Haftung zu Nachfolgeschichten, z.B. Füller oder Polyvinylchlorid-Materialien, deutlich verschlechtert werden.

Unabhängig von der Ursache der Krater ist festzustellen, daß der Wirkungsgrad der bekannten Antikratermittel für KTL-Systeme in der Praxis nicht ausreicht. Auch erhöhte Mengen dieser Additive führen nicht zu einer völligen Beseitigung der Krater. Deshalb müssen häufig die Substrate nachgearbeitet werden, z.B. durch Schleifen oder Nachlackieren.

Es bestand daher die Aufgabe, ein Oberflächen verbesserndes Mittel, insbesondere ein Antikratermittel bereitzustellen, das einen verbesserten Wirkungsgrad aufweist, keine nachteiligen Nebeneffekte verursacht und eine gute Haftung von Nachfolgeüberzügen gewährleistet.

Die Aufgabe wird dadurch gelöst, daß Polyvinylether (Gewichtsmittel der Molmasse von 500 bis 10000) zusammen mit Polyestern (Gewichtsmittel der Molmasse von 1000 bis 10000) mit einer Säurezahl von maximal 3, welche $\beta$-Hydroxyalkylestergruppen enthalten und bevorzugt mit dem KTL-Bindemittel nicht völlig verträglich sind, dem KTL-Bad zugefügt werden, wobei der Polyester in einer Menge von 0,1 bis 2 %, bevorzugt 0,1 bis 1 % Massenanteil, bezogen auf das KTL-Bindemittel, einschließlich möglichem Vernetzer verwendet wird und die Massenanteile von Polyvinylether zu Polyester im Verhältnis 1:10 bis 10:1 zueinander stehen.

Polyester mit einer Säurezahl von maximal 3, die im wesentlichen frei von sauren Gruppen sind und $\beta$-Hydroxyestergruppen enthalten, werden in EP-A-0 012 463, EP-A-0 066 859 und DE-A-34 36 345 als Vernetzer beschrieben. Ihre gemeinsame Verwendung zusammen mit Polyvinylethern in einer Menge, die für die Vernetzung zu gering ist, ist als Antikratermittel noch nicht bekannt.

Im Rahmen der Erfindung hat es sich gezeigt, daß nicht saure Polycarbonsäurereste mit mindestens zwei end- oder seitenständigen gesättigten oder ungesättigten $\beta$-Hydroxyalkylestergruppen pro Molekül und einem Gewichtsmittel der Molmasse von 1000 bis 10000 eine Wirkung als Oberflächen verbessernde Mittel haben, wenn sie in KTL-Systemen in einer Menge $\leq$ 2 Gew.%, bezogen auf das KTL-Bindemittel plus gegebenenfalls vorhandenem Vernetzer (jeweils berechnet auf den Harzfestkörper), eingesetzt werden und zwar im Gemisch mit Homo- oder Copolymeren von Alkylvinylethern mit einem Alkylrest von 1 bis 5 C-Atomen in einer Menge $\leq$ 5 Gew.% (ebenfalls bezogen auf das KTL-Bindemittel plus gegebenenfalls vorhandenem Vernetzer, jeweils berechnet auf den Harzfestkörper). Bei der KTL-Abscheidung unter Verwendung dieses Gemisches entstehen glatte, krater- und störungsfreie Oberflächen, die keine Haftungsstörungen zu Nachfolgeschichten aufweisen. Die erfindungsgemäß eingesetzten Additiv-Gemische zeigen eine unerwartete Wirkung, da jede der beiden Einzelkomponenten auch in höherer Menge eingesetzt, nicht zu einer völligen Beseitigung der Oberflächenstörungen führt. Erst im Gemisch werden alle Oberflächenstörungen beseitigt.

Das erfindungsgemäß verwendete Antikratermittel kann in Form des vorgefertigten Gemisches eingesetzt werden, jedoch können auch die beiden Einzelkomponenten in den angegebenen Mengen dem Elektrotauchlackbad zugesetzt werden. Die Reihenfolge des Zusatzes spielt dabei keine Rolle. Da das erfindungsgemäß verwendete Antikratermittel in geringen Mengen eingesetzt wird, treten Nachteile höherer Dosierungen, die sich bei Anwendung von Antikrateradditiven ergeben können, wie z.B. Haftungsstörungen oder eine rauhe Oberfläche, nicht auf.

Erfindungsgemäß werden übliche Elektrotauchlackbäder eingesetzt, die aus einer wäßrigen Lösung von kathodisch abscheidbaren selbst- oder fremdvernetzenden Kunstharzen, üblichen Pigmenten und/oder Füllstoffen sowie weiteren lacküblichen Additiven und Hilfsstoffen, bestehen. Die oberflächenverbessernden Mittel können den Elektrotauchlackbädern von vornherein bei der Herstellung, oder aber auch nachträglich unmittelbar vor der Verwendung zur Elektrotauchlackierung, zugesetzt werden. Wie erwähnt, können die beiden Einzelkomponenten des erfindungsgemäßen Antikratermittels einzeln oder auch als Gemisch zugesetzt werden.

Die erfindungsgemäß verwendeten Antikratermittel werden in geringer Menge eingesetzt. Dabei kann es in Einzelfällen günstig sein, die Menge des Gemisches oder die Menge der Einzelkomponenten im Experiment innerhalb der angegebenen Grenzen so zu wählen, daß im abgeschiedenen Überzug keine Krater mehr vorhanden sind.

Die Menge der Additive wird so gewählt, daß im abgeschiedenen Überzug keine Krater mehr vorhanden sind. Ist die gewählte Menge zu hoch, so werden Oberflächenstörungen, wie z.B. die Haftung der Nachfolgeschichten, negativ beeinflußt. Ist die Menge zu gering, so reicht die Antikraterwirkung nicht aus. In diesem Fall ist die Menge des eingesetzten Antikratermittels zu erhöhen.

Die im erfindungsgemäßen Antikratermittel verwendeten Polyalkylvinylether sind Polymere von Alkylvinylethern mit einem Alkylrest von 1 bis 5, bevorzugt 2 bis 4 C-Atomen. Es sind Homopolymere oder Polymere aus verschiedenen Alkylvinylethermonomeren. Außerdem können Copolymere mit bis zu 25 % Comonomeranteil eingesetzt werden. Als Comonomere sind olefinisch ungesättigte Monomere geeignet, die mit den Alkylvinylethern copolymerisierbar sind und bevorzugt keine funktionellen, insbesondere keine wasserlöslich machenden Gruppen, enthalten. Es sind beispielsweise Styrol, Alkylacrylate und/oder Alkylmethacrylate, wobei die Alkylreste z.B. Methyl- oder Ethylreste sind. Das Gewichtsmittel der Molmasse der erhaltenen Polymeren und Copolymeren soll zwischen 500 und 10000 liegen. Die verwendeten Polyalkylvinylether weisen in der Seitenkette keine funktionellen Gruppen auf, sie sind nicht wasserlöslich.

3

Die im erfindungsgemäßen Antikratermittel eingesetzten, nicht sauren Polyester mit seiten- oder endständigen β-Hydroxyalkylestergruppen sind Ester von aromatischen Polycarbonsäuren, wie beispielsweise Isophthalsäure, Terephthalsäure, Trimellithsäure oder Gemischen davon. Diese werden z. B. mit Ethylenglykol, Neopentylglkykol, Trimethylolpropan und/oder Pentaerythrit kondensiert. Die Carboxylgruppen werden dann mit gegebenenfalls substituierten 1,2-Glykolen unter Bildung von β-Hydroxyalkylverbindungen umgesetzt. Die 1,2-Glykole können mit gesättigten oder ungesättigten Alkyl-, Ether-, Ester- oder Amidgruppen substituiert sein. Weiter ist auch eine Hydroxyalkylesterbildung möglich, in dem die Carboxylgruppen mit substituierten Glycidylverbindungen, wie z. B. Glycidylethern oder Glycidylestern, umgesetzt werden.

Das Produkt enthält bevorzugt mehr als 3 β-Hydroxyalkylestergruppen pro Molekül und hat ein Gewichtsmittel der Molmasse von 1000 bis 10000, bevorzugt von 1500 bis 5000. Die erfindungsgemäß eingesetzten nicht sauren Polyester mit seiten- oder endständigen β-Hydroxyalkylestergruppen können hergestellt werden, wie beispielsweise in EP-A-0 012 463 beschrieben. Die dort beschriebenen Verbindungen stellen auch Beispiele für erfindungsgemäß einsetzbare Polyester dar.

Die für den erfindungsgemäßen Zweck geeigneten Polyester zeichnen sich dadurch aus, daß sie bevorzugt nur eine begrenzte Mischbarkeit mit KTL-Bindemitteln besitzen. Im Einzelfall kann die Verträglichkeit wie folgt festgestellt werden: Das Bindemittel einschließlich gegebenenfalls vorhandene Vernetzer wird mit dem Polyester im Gewichtsverhältnis 9:1 gemischt, und mit Butylglykol auf 75 % Festkörper verdünnt. Die Probe muß zunächst zu einer homogenen Mischung führen, die sich jedoch beim Stehenlassen innerhalb von 2 Tagen wieder entmischt. Ist eine vollständige Verträglichkeit (also keine Entmischung innerhalb von 2 Tagen) gegeben, so ist die Antikraterwirkung gering. Ist eine völlige Unverträglichkeit (also keine homogene Mischbarkeit) vorhanden, so wird eine starke Störung der Nachfolgeschichthaftung beobachtet.

Der funktionalisierte Polyester wird in Mengen ≤ 2 Gew.%, bevorzugt ≤ 1 Gew%, bezogen auf Festkörper des KTL-Bindemittels einschließlich Vernetzer, eingesetzt. Obwohl eine Reaktion dieses Zusatzmittels mit den KTL-Bindemitteln beim Erhitzen auf höhere Temperaturen nicht auszuschließen ist, dient infolge der geringen Menge dieses Zusatzmittel nicht als Vernetzer. Der Polyalkyvinylether ist nicht funktionalisiert. Er sollte beim Einbrennen nicht mit dem KTL-Bindemittel reagieren. Die eingesetzte Menge beträgt ≤ 5 Gew.%, bevorzugt ≤ 3 Gew.%, jeweils bezogen auf Festkörper des KTL-Bindemittels einschließlich Vernetzer.

Die optimale Mischung kann der Fachmann durch Experimente leicht ermitteln. Beispielsweise kann ein Additiv so weit zugesetzt werden, daß eine glatte Oberfläche mit nur wenigen Kratern erhalten wird. Durch Zusatz einer weiteren geringen Menge des anderen Additivs werden auch die übrigen Oberflächenstörungen verhindert. Der Film erhält dann eine glatte, homogene Oberfläche und stört die Nachfolgeschichthaftung nicht.

Die in den Elektrotauchbädern verwendeten Bindemittel enthalten für diesen Zweck übliche basische Harze, mit basischen Gruppen, die Schwefel, Stickstoff oder Phosphor enthalten. Bevorzugt sind stickstoffhaltige basische Gruppen. Diese Gruppen können quaternisiert vorliegen, oder sie werden mit einem üblichen Neutralisationsmttiel, wie z.B. organische Monocarbonsäuren in ionische Gruppen überführt.

Basische Basisharze sind primäre, sekundäre oder tertiäre Aminogruppen enthaltende Harze, deren Aminzahlen z.B. zwischen 20 bis 250 liegen. Das Gewichtsmittel der Molmasse der Basisharze liegt bevorzugt zwischen 300 bis 10000. Als basische Gruppen treten neben -NH$_2$, -NRH, -NR$_2$ und $^\pm$NR$_3$, z.B. auch $^\pm$SR$_2$, $^\pm$PR$_3$ auf, worin R beispielsweise einen Alkylrest mit 1 bis 4 C-Atomen darstellt und die Reste R gleich oder verschieden sein können. Bevorzugt sind stickstoffhaltige basische Gruppen. Als Neutralisationsmittel, die in den wäßrigen Bindemittellösungen als Anionen fungieren, können die theoretisch bekannten und in der Praxis verwendeten anorganischen und/oder organischen Säuren eingesetzt werden. In der Praxis werden hauptsächlich einwertige Säuren eingesetzt, die eine gute Löslichkeit des Bindemittels bewirken. Bevorzugt werden Ameisensäure, Essigsäure, Milchsäure und Alkylphosphorsäuren eingesetzt.

Basisharze sind z.B. Aminoepoxidharze, Aminoepoxidharze mit endständigen Doppelbindungen, Aminopolyurethanharze, aminogruppenhaltige Polybutadienharze und modifizierte Epoxid-Kohlendioxid-Amin-Umsetzungsprodukte.

Bevorzugt werden Aminoepoxidharze, insbesondere solche auf Basis von Bisphenol A. Diese Basisharze werden in der Literatur, z.B. in der EP-A-0 082 291 und DE-A-32 34 395, beschrieben.

Die Basisharze können selbst- oder fremdvernetzend sein. Als Vernetzungsmittel für fremdvernetzende Basisharze eignen sich übliche Vernetzer, wie beispielsweise Triazinharze, blockierte Isocyanate, Vernetzer mit endständigen Doppelbindungen und zur Michael-Addition mit aktivierten Doppelbindungen fähige Vernetzer mit aktivem Wasserstoff. Diese sind beispielsweise in der EP-A-0 245 786, EP-A-0 004 090, EP-A-0319 929, DE-A-37 20 956 und in EF-A-0 193 685, US-A-4 810 535 und DE-A-38 30 626 beschrieben.

4

Die verschiedenen Vernetzer können einzeln oder gemischt zusammen mit den Basisharzen eingesetzt werden.

Die erfindungsgemäß eingesetzten Elektrotauchlacke können Pigmente enthalten. Als Pigmente können für die KTL-Abscheidung übliche Pigmente. und/oder Füllstoffe eingesetzt werden, wie beispielsweise Ruß, Titandioxid, Eisenoxidrot, Kaolin, Talkum oder Siliciumdioxid. Die Pigmente werden bevorzugt in üblichen Pigmentpastenharzen dispergiert und angerieben. Solche Harze sind beispielsweise in der EP-B-0 183 025 beschrieben. Das Herstellen der Pigmentpasten und das Herstellen der kathodischen Tauchlackbäder sind dem Fachmann geläufig. Beispielsweise können Pigmente und/oder Füllstoffe in üblichen Anreibebindemitteln dispergiert und dann auf einem geeigneten Aggregat, z.B. einer Perlmühle vermahlen werden. Die so erhaltene Pigmentpaste kann dann in verschiedener Weise den KTL-Bindemitteln zugesetzt werden. Beispielsweise wird sie mit den KTL-Bindemitteln vermischt. Aus diesem Material kann dann durch Verdünnen mit voll entsalztem Wasser das KTL-Überzugsbad hergestellt werden. Ein Beispiel für eine andere Vorgehensweise überführt zuerst die neutralisierten und somit wasserlöslichen Bindemittel oder Bindemittelmischungen in eine Dispersion. Diese wird weiter mit voll entsalztem Wasser verdünnt und danach wird die wäßrige Pigmentpaste zugefügt. Man erhält so ebenfalls ein beschichtungsfähiges KTL-Bad. Die erfindungsgemäß eingesetzten Elektrotauchlackbäder enthalten neben Pigmenten und Füllstoffen auch die genannten Neutralisationsmittel; sie können zusätzlich für KTL-Bäder übliche Lösemittel und/oder weitere lacktübliche Additive oder Hilfsstoffe, wie z.B. Entschäumer oder Katalysatoren, enthalten.

Wie erwähnt, können die erfindungsgemäß eingesetzten Antikrateradditive entweder einzeln oder gemeinsam eingesetzt werden. Hierzu können sie beispielsweise in der Bindemittelmischung vor oder nach dem Neutralisieren dispergiert werden und gemeinsam mit dem Bindemittel in die Dispersionsphase überführt werden. Ein Beispiel für eine andere Verfahrensweise liegt darin, daß nach Überführung der Bindemittel in die Wasserphase die Additive einzeln oder gemeinsam z.B. mit einem Hilfsmittel, wie z.B. einem Teil der dispergierbaren neutralisierten Harze oder dem neutralisierten Pastenharz oder einem geeigneten Lösemittel der Dispersion zugeführt werden. Nach gründlicher Homogenisation sind die Additive stabil eingearbeitet.

Eine weitere Möglichkeit besteht darin, die Antikrateradditive in die Pigmentpaste einzuarbeiten. Das geschieht vorteilhafterweise vor dem Vermahlen der Pigmentpaste, um so sicherzustellen, daß die Additive homogen in der Pigmentpaste verteilt werden. Die so erhaltenen Pasten sind stabil und zeigen nach Zufügen zu dem Elektrotauchlacküberzugsbad die gewünschten Eigenschaften.

Es ist prinzipiell möglich, die beiden Additive gemeinsam zuzusetzen oder auch getrennt. Zusätzlich ist es möglich, zu beschichtungsfertigen KTL-Bädern die Additive nachträglich zuzusetzen. Sie müssen dafür nur in einer wasserverdünnbare Form überführt werden, wie z.B. durch Lösemittel, wasserdispergierbare Emulgatoren, lösliche Bindemittel oder lösliche Pastenharze. Diese Vorgehensweise ist besonders dann geeignet, wenn es sich herausgestellt hat, daß beim Arbeiten mit einem bereits vorhandenen Beschichtungsbad Oberflächenstörungen auftreten. Nach dem Zusatz des erfindungsgemäßen Antikratermittels werden diese Störungen dann beseitigt.

Aus den erfindungsgemäß mit Antikratermittel versehenen Elektrotauchlackbädern können unter üblichen Bedingungen verschiedene Substrate beschichtet werden. Diese weisen nach dem Einbrennen eine glatte, kraterfreie Oberfläche auf. Durch die erfindungsgemäßen Antikrateradditive werden sonstige Lackeigenschaften, wie z.B. Korrosionsschutz, Steinschlag, Nachfolgeschichthaftung, nicht beeinflußt. Die erfindungsgemäßen Antikratermittel eignen sich somit insbesondere auf dem Kraftfahrzeugsektor, beispielsweise zur Grundierung von Kraftfahrzeugkarosserien oder Kraftfahrzeugkarosserieteilen, mit nachfolgendem Mehrschicht-Lackaufbau.

Die folgenden Beispiele dienen zur Erläuterung der Erfindung. Alle Prozentangaben und Teile beziehen sich, sofern nicht anders angegeben, auf das Gewicht. Der Festkörper wird analog DIN 53 182 bei 150°C bestimmt.

Bindemittelbeispiel 1:

Gemäß EP-A-0 012 463 werden 391 g Diethanolamin, 189 g 3-(N-N-Dimethylamino)-propylamin und 1147 g eines Adduktes aus 2 mol Hexandiamin-1,6 und 4 mol Glycidylester der Versaticsäure (Cardura ® E 10 von Shell) zu 5273 g Bisphenol A Epoxidharz (Epoxidäquivalentgewicht ca. 475) in 3000 g Ethoxypropanol gegeben. Das Reaktionsgemisch wird 4 Stunden unter Rühren bei 85° bis 90°C und dann 1 Stunde bei 120°C gehalten. Anschließend wird mit Ethoxypropanol auf einen Festkörper von 60 % verdünnt.

Bindemittelbeispiel 2:

Zu 431 g einer Lösung (75 % in Ethylacetat) eines Umsetzungsproduktes aus 3 mol Toluylendiisocyanat mit 1 mol Trimethylolpropan (Desmodur ⓛ ) werden bei 70°C langsam unter Rühren 160 g Caprolactam zugefügt. Die Reaktionsmischung wird danach bei 70°C gehalten, bis der NCO-Gehalt praktisch auf Null gesunken ist. Dann wird 2-Butoxyethanol (204 g) zugegeben und das Ethylacetat über eine Kolonne bis zu einem Festkörper von 70% abdestilliert.

Bindemttelbeispiel 3a:

1155 g eines Harzes nach Beispiel 1 und 425 g nach Beispiel 2 werden gemischt und dann im Vakuum auf ca. 85 % Festkörper abdestilliert. Dazu werden in der Wärme 45 mmol/100 g Festkörper Ameisensäure (50 %) gegeben und danach mit vollentsalztem Wasser auf ca. 30 % Festkörper verdünnt.

Bindemittelbeispiel 3b:

Es wird genauso wie in Beispiel 3a verfahren, nur werden zu den Bindemitteln 6,6 g der Antikratermittelkomponente nach Beispiel 6 gegeben.

Bindemittelbeispiel 3c:

Es wird wie in Beispiel 3a verfahren, nur werden den Harzen 13,2 g eines handelsüblichen Polyethylvinylethers (M 1000 - 10000) zugesetzt.

Bindemittelbeispiel 3d:

Es wird wie in Beispiel 3a verfahren, es werden jedoch 6,6 g Antikratermittelkomponente nach Beispiel 6 und 13,2 g eines handelsüblichen Polyethylvinylethers (M 1000 - 10000) zugesetzt.

Bindemittelbeispiel 4a:

Es werden 228 Teile Bisphenol A (1 mol) mit 260 Teilen Diethylaminopropylamin (2 mol) und 66 Teilen Paraformaldehyd (91 %; 2 mol) in Gegenwart von 131 Teilen Toluol als Azeotropschleppmittel bis zur Abtrennung von 42 Teilen Reaktionswasser umgesetzt. Nach Addition von 152 Teilen Diethylenglykoldimethylether und Kühlen des Produkts auf 30°C werden innerhalb von 45 min 608 Teile (2 mol) eines mit 2-Ethylhexanol halbblockierten Toluylendiisocyanats zugegeben. Nach Erreichen eines NCO-Wertes von praktisch Null werden 1400 Teile dieser Lösung mit einer Lösung von 190 Teilen eines Epoxidharzes auf Basis von Bisphenol A (Epoxidäquivalentgewicht ca. 190) und 250 Teilen (1 mol) eines Glycidylesters einer gesättigten tertiären $C_9$ bis $C_{11}$ Monocarbonsäure in 389 Teilen Diethylenglykoldimethylether versetzt und bei 95° bis 100 100°C bis zu einem Epoxidwert von Null umgesetzt. Das Bindemittel ist nach Zusatz von 40 mmol/1000 g Festkörper Ameisensäure (50 %) gut in Wasser zu lösen. Es wird ein Festkörper von 35 % eingestellt.

Bindemittelbeispiel 4b:

Es wird wie in Beispiel 4a verfahren, nur werden vor dem Verdünnen mit Wasser 17,2 g der Antikratermittelkomponente nach Beispiel 6 und 17,2 g eines Polyethylvinylethers (M 1000 - 10000) zugesetzt.

Pigmentpastenbeispiel 5:

Zu 188 g eines Pastenharzes nach EP-B-0 183 025, Beispiel 5 (80 %), werden unter einem schnellaufenden Rührer 55 g Ameisensäure (50 %) und 485 g vollentsalztes Wasser gegeben. Dazu werden 30 g Ruß, 10 g pyrogene Kieselsäure, 30 g Dibutylzinnoxidpulver, 30 g Bleisilikat und 500 g Titandioxid gegeben. Mit ca. 200 g vollentsalztem Wasser wird auf ca. 48 % Festkörper eingestellt und auf einer Perlmühle vermahlen. Es entsteht eine stabile Pigmentpaste.

Additivbeispiel 6:
(Herstellung eines $\beta$-Hydroxyestergruppen enthaltenden Polyesters als Antikratermittelkomponente)

768 g Trimellithsäureanhydrid und 2000 g eines Glycidylesters einer verzweigten, tertiären $C_{10}$ - Monocarbonsäure (Cardura E10® ) werden vorsichtig unter Rühren auf 190°C erhitzt, wobei ab 90°C eine exotherme Reaktion beginnt. Das Reaktionsgut wird auf 140°C gekühlt und mit 2,75 g N,N-Dimethylbenzylamin versetzt. Das Reaktionsgut wird auf 145°C gehalten, bis eine Säurezahl unter 3 mg KOH/g erreicht wird. Wenn nötig, wird eine berechnete Menge Cardura E10® zusätzlich zugegeben. Das Umsetzungsprodukt wird mit 2-Butoxyethanol auf 80 % Festkörper verdünnt.

Lackbeispiel 7a - d:

Zu 1700 g einer Dispersion nach den Beispielen 3a - d werden unter gutem Rühren 600 g einer Pigmentpaste nach Beispiel 5 gegeben. Dazu wird weiter mit 1700 g vollentsalztem Wasser verdünnt. Zu den Bädern wird 4 g einer kraterverursachenden Substanz (ASTM-Ö1 Nr. 1, Fa. Fuchs-Mineralölwerke GmbH, Mannheim) gegeben und gut homogenisiert.

Lackbeispiel 7e:

Zu dem Bad nach Beispiel 7c werden 3,5 g der Antikratermittelkomponente von Beispiel 6, mit dem Pastenharz (1:1) gemischt, mit 30 mmol/1000 g Festkörper Ameisensäure neutralisiert und mit Butylglykol auf 50 % Festkörper verdünnt, nachträglich zugegeben. Es wird gründlich homogenisiert.

Aus diesen KTL-Bädern werden übliche zinkphosphatierte Stahlbleche beschichtet (Schichtdicke ca. 20 $\mu$m) und bei 170°C für 30 min eingebrannt. Es wird die Oberfläche beurteilt und die Haftung von Polyvinylchlorid (PVC)-Materialien auf der Oberfläche.

| Ansatz | Oberfläche | PVC-Haftung |
|---|---|---|
| 7a (Vergleich) | Krater | gut |
| 7b (Vergleich) | Krater | gut |
| 7c (Vergleich) | Krater | gut |
| 7d | gut | gut |
| 7e | gut | gut |

Es zeigt sich, daß mit dem Ansatz 7a, der ohne Antikratermittel durchgeführt wurde, mit dem Ansatz 7b, der nur mit dem Polyester mit $\beta$-Hydroxyestergruppen allein durchgeführt wurde und mit dem Ansatz 7c, der nur mit dem Polyalkylvinylether allein durchgeführt wurde, keine Antikraterwirkung erzielt wurde. Lediglich durch den erfindungsgemäßen gemeinsamen Einsatz der Antikratermittelkomponenten Polyester mit $\beta$-Hydroxyestergruppen und Polyalkylvinylether in den Ansätzen 7d und 7e wurde eine kraterfreie Oberfläche bei guter Nachfolgehaftung erzielt.

Lackbeispiel 8a - b:

Zu 1130 g einer Dispersion nach Beispiel 4a, b werden 360 g der Pigmentpaste nach Beispiel 5 gegeben und dann mit vollentsalztem Wasser unter intensivem Rühren auf 3000 g aufgefüllt. Zu diesem Bad werden 3 g einer kraterbildenden Substanz (Anticorrit 15N-68, Fa. Fuchs-Mineralölwerke, Mannhein) gegeben und über Nacht eingerührt.

Lackbeispiel 8c:

Zu 360 g Pigmentpaste nach Beispiel 5 werden 0,5 g der Antikratermittelkomponente nach Beispiel 6 gegeben und gründlich dispergiert. Damit wird dann nach Beispiel 8a ein KTL-Bad erstellt.

Lackbeispiel 8d:

Zu 360 g einer Paste nach Beispiel 5 werden 8,6 g der Antikratermittelkomponente nach Beispiel 6 gegeben und gründlich homogenisiert. Damit wird nach Beispiel 8a ein KTL-Bad erstellt.

Aus diesen KTL-Bädern werden übliche zinkphosphatierte Stahlbleche beschichtet (20 $\mu$m Trockenfilm-

7

stärke) und bei 170°C 30 min eingebrannt. Es wird die Oberfläche beurteilt und die Haftung von PVC-Materialien auf der Oberfläche.

| Ansatz | Oberfläche | PVC-Haftung |
|---|---|---|
| 8a (Vergleich) | Krater | gut |
| 8b | gut | gut |
| 8c (Vergleich) | Krater | gut |
| 8d (Vergleich) | gut | schlecht |

Es zeigt sich, daß lediglich unter Verwendung des erfindungsgemäßen Antikratermittels im Ansatz 8b eine gute Antikraterwirkung bei gleichzeitig guter Nachfolgehaftung erzielt wird.

Die Korrosionsschutzergebnisse der verschiedenen Ansätze sind vergleichbar und ergeben gute Resultate. Die PVC-Materialien sind übliche Unterbodenschutz-Materialien der Fa. Dr. A. Stankiewicz GmbH, Celle und Teroson GmbH, Heidelberg; sie werden 3mm Schicht aufgerakelt, 10 min bei 140°C eingebrannt und 1 Stunde später wird nach Anscheiden die Haftung zwischen Grundierung und PVC geprüft.

**Patentansprüche**

1. Kathodisch abscheidbare Bindemittel enthaltende wäßrige Elektrotauchlackbäder mit einem Gehalt an Homo- oder Copolymeren eines Alkylvinylethers, **dadurch gekennzeichnet,** daß sie als Additive zur Oberflächenverbesserung

   0,1 bis 5 Gew.% eines oder mehrerer Homo- oder Copolymerer eines Alkylvinylethers mit 1 - 5 Kohlenstoffatomen im Alkylrest, mit einem Gewichtsmittel der Molmasse von 500 bis 10000, zusammen mit

   0,1 bis 2 Gew.% eines oder mehrerer Polyester mit $\beta$-Hydroxyalkylestergruppen, mit einer Säurezahl von 0 bis 3 und einem Gewichtsmittel der Molmasse von 1000 bis 10000,

   enthalten, wobei sich die Gewichtsprozente auf den Festkörper der Bindemittel beziehen, und die Massenanteile von Homo- oder Copolymeren des Alkylvinylethers zu Polyester im Verhältnis 1:10 bis 10:1, jeweils bezogen auf den Harzfestkörper, zueinander stehen.

2. Elektrotauchlackbäder nach Anspruch 1, dadurch gekennzeichnet, daß die Polyester mit $\beta$-Hydroxyalkylestergruppen so gewählt sind, daß sie mit den im Elektrotauchlackbad enthaltenen Bindemitteln nur begrenzt mischbar sind.

3. Verfahren zum Beschichten elektrisch leitfähiger Substrate, durch Eintauchen des Substrats als Kathode in ein kathodisch abscheidbare Bindemittel enthaltendes wäßriges Elektrotauchlackbad, kathodische Abscheidung eines Lackfilms auf dem Substrat, Entnahme des Substrats aus dem Elektrotauchlackbad und Einbrennen des Lackfilms, dadurch gekennzeichnet, daß man ein wäßriges Elektrotauchlackbad verwendet, dem als Additive zur Oberflächenverbesserung

   0,1 bis 5 Gew.% eines oder mehrerer Homo- oder Copolymerer eines Alkylvinylethers mit 1 bis 5 Kohlenstoffatomen im Alkylrest, mit einem Gewichtsmittel der Molmasse von 500 bis 10000, zusammen mit

   0,1 bis 2 Gew.% eines oder mehrerer Polyester mit $\beta$-Hydroxylalkylestergruppen, mit einer Säurezahl von 0 bis 3 und einem Gewichtsmittel der Molmasse von 1000 bis 10000,

   wobei sich die Gewichtsprozente auf den Festkörper der Bindemittel beziehen und die Massenanteile von Homo- oder Copolymeren des Alkylvinylethers zu Polyester im Verhältnis 1:10 bis 10:1, jeweils bezogen auf den Harzfestkörper, zueinander stehen, zugesetzt wurden.

4. Verfahren nach Anspruch 3, dadurch gekennzeichnet, daß ein oder mehrere Polyester mit $\beta$-Hydroxyalkylestergruppen zugesetzt wurden, die so gewählt wurden, daß sie mit den im Elektrotauchlackbad enthaltenen Bindemitteln nur begrenzt mischbar sind.

5. Verwendung von
einem oder mehreren Homo- oder Copolymeren eines Alkylvinylethers mit 1 bis 5 Kohlenstoffatomen im Alkylrest, mit einem Gewichtsmittel der Molmasse von 500 bis 10000, zusammen mit einem oder mehreren Polyestern mit $\beta$-Hydroxyalkylestergruppen, mit einer Säurezahl von 0 bis 3 und einem Gewichtsmittel der Molmasse von 1000 bis 10000, wobei die Massenteile von Homo- oder Copolymeren des Alkylvinylethers zu Polyester im Verhältnis 1:10 bis 10:1, jeweils bezogen auf den Harzfestkörper, zueinander stehen, als Additive zur Oberflächenverbesserung in kathodisch abscheidbare Bindemittel enthaltenden wäßrigen Elektrotauchlackbädern.

6. Verwendung nach Anspruch 3 als Antikratermittel.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y,D | EP-A-0 301 293  (BASF) <br> * Ansprüche 1-5 * <br><br> – – – | 1,3,5,6 | C 09 D 5/44 |
| Y | WO-A-9 006 971  (BASF) <br> * Seite 12, Zeilen 25-35; Seite 13, Zeile 17; Seite 31, Zeilen 23-27; Ansprüche 16,20 * <br><br> – – – | 1,3,5,6 | |
| A,D | EP-A-0 012 463  (SHELL) <br><br> – – – – – | | |

RECHERCHIERTE SACHGEBIETE (Int. Cl.5)

C 09 D

**Der vorliegende Recherchenbericht wurde für alle Patentansprüche erstellt**

| Recherchenort | Abschlußdatum der Recherche | Prüfer |
|---|---|---|
| Den Haag | 23 September 91 | BUSCAGLIONE Y. |